# FASCICULE DE BREVET EUROPEEN

(11) **EP 3 007 946 B1**
(45) Date de publication et mention de la délivrance du brevet: **20.05.2020**
(21) Numéro de dépôt: 14730521.3
(22) Date de dépôt: 13.06.2014
(51) Int. Cl.: B60S 1/50, B67D 7/02, B65D 47/26, B67D 3/00

(54) **RÉCIPIENT DE FLUIDE LAVE-GLACE, ORGANE DESTINÉ À ÊTRE RELIÉ À CE RÉCIPIENT ET DISPOSITIF COMPRENANT LES DITS RÉCIPIENT ET ORGANE**
WISCHERFLÜSSIGKEITSBEHÄLTER, ELEMENT ZUR VERBINDUNG MIT DIESEM BEHÄLTER UND VORRICHTUNG MIT DIESEM BEHÄLTER UND DIESEM ELEMENT
WIPER FLUID CONTAINER, MEMBER DESIGNED TO BE CONNECTED TO THAT CONTAINER, AND DEVICE COMPRISING SAID CONTAINER AND MEMBER

(30) Priorité: 14.06.2013 FR 1355545
(43) Date de publication de la demande: 20.04.2016
(73) Titulaire: Valeo Systèmes d'Essuyage, 78322 Le Mesnil Saint Denis (FR)
(72) Inventeur: ROUSSEAU, Jean-Franois, F-63340 Charbonnier les Mines (FR)
(74) Mandataire: Valeo Systèmes d'Essuyage
(86) Numéro de dépôt international: PCT/EP2014/062415
(87) Numéro de publication internationale: WO 2014/198916

(56) Documents cités:
- FR-A1- 2 846 634
- JP-U- S49 113 346
- US-A- 4 905 904
- US-A- 4 991 635
- US-A1- 2010 140 378

## Description

### DOMAINE TECHNIQUE

La présente invention concerne un récipient de fluide lave-glace, un organe tel qu'une pompe ou un réservoir destiné à être raccordé à ce récipient, un dispositif d'alimentation en fluide lave-glace et un système de lavage de pare-brise de véhicule.

### ETAT DE L'ART

Les automobiles sont couramment équipées de systèmes de lavage pour nettoyer le pare-brise de ce qui pourrait bloquer la vision des passagers du véhicule, tel que des éclaboussures, des insectes, du givre, de la glace. Ces systèmes de lavage sont accompagnés de systèmes d'essuie-glaces et comprennent un réservoir de fluide lave-glace installé sur le véhicule et des moyens d'aspersion pour permettre au liquide contenu dans le réservoir d'être pulvérisé en direction du pare-brise. Pour un nettoyage amélioré du pare-brise, il est possible de compléter le fluide lave-glace habituel par un produit supplémentaire adapté à la période de l'année et/ou à l'effet recherché. Par exemple, ce produit peut améliorer l'enlèvement des insectes en été ou le dégivrage du pare-brise en hiver. Il est en général ajouté au fluide lave-glace habituel et aspergé sur le pare-brise en combinaison avec ce fluide.

Dans la technique actuelle, le remplissage du réservoir avec du fluide lave-glace ou l'ajout du produit supplémentaire dans ce réservoir est réalisé au moyen d'un entonnoir dont la partie de faible section est engagée dans une ouverture du réservoir, le fluide ou le produit étant alors versé dans la partie évasée de grande section de l'entonnoir.

Cependant, ce remplissage n'est pas aisé et peut entraîner des pertes de fluide lave-glace ou de produit supplémentaire, ce dernier étant relativement coûteux. En effet, lorsque le récipient contenant le produit supplémentaire est amené à proximité de l'ouverture du réservoir en vue de son remplissage ou est éloigné de ce réservoir après son remplissage, du produit peut encore s'échapper du récipient ce qui n'est pas économique. De plus, toute personne peut remplir le réservoir de cette façon. Il existe donc un risque qu'un produit non adapté soit introduit dans le réservoir et endommage le système de lavage. US-A-4905904 montre le préambule des revendications 1 et 14.

La présente invention a notamment pour but d'apporter une solution simple, efficace et économique à au moins une partie de ces problèmes.

### EXPOSE DE L'INVENTION

L'invention propose un récipient de fluide lave-glace, comprenant une ouverture de distribution de fluide équipée de premiers moyens de raccordement configurés pour coopérer avec des seconds moyens de raccordement d'une ouverture d'un organe tel qu'une pompe ou un réservoir pour assurer une communication fluidique entre ces ouvertures, lesdits premiers moyens de raccordement comprenant un élément mobile depuis une première position d'obturation de l'ouverture du récipient jusqu'à une deuxième position de libération de cette ouverture, ces premiers moyens étant configurés pour coopérer avec les seconds moyens pour provoquer le déplacement de l'organe mobile de la première à la deuxième position, les premiers moyens de raccordement comprennent un bouchon monté au niveau de l'ouverture du récipient et comportant au moins un orifice ou une fente de passage de liquide, le récipient est caractérisé en ce que le bouchon forme l'élément mobile et est déplaçable en rotation autour de son axe longitudinal vis-à-vis du récipient, entre une première position dans laquelle le bouchon obture l'ouverture du récipient, et une deuxième position dans laquelle ledit au moins un orifice ou ladite au moins une fente du bouchon est en communication fluidique avec cette ouverture.

L'ouverture de distribution du récipient n'est ainsi libérée que lorsque l'élément mobile est dans sa deuxième position. Le déplacement de l'organe mobile de la première à la deuxième position résulte de la coopération entre les moyens de raccordement du récipient et de l'organe. La coopération entre les moyens de raccordement du récipient et de l'organe est donc nécessaire pour libérer l'ouverture du récipient et autoriser la distribution de fluide par cette ouverture. Autrement dit, en l'absence d'une telle coopération, l'ouverture du récipient est obturée et le fluide du récipient ne peut donc pas sortir par cette ouverture. L'invention permet ainsi de limiter les pertes de fluide lave-glace, tel qu'un liquide de nettoyage classique ou un produit spécifique (anti-moustique ou anti givre).

Avantageusement, le bouchon comprend une paroi transversale dans laquelle est formé ledit au moins un orifice ou ladite au moins une fente. Cette paroi transversale peut être configurée pour empêcher l'utilisation d'un entonnoir pour le remplissage du récipient, et en particulier pour empêcher l'engagement de la partie de petite section de cet entonnoir dans l'ouverture du récipient.

Le bouchon peut être configuré pour être au moins en partie emboîté dans les seconds moyens de raccordement. Le bouchon comprend de préférence des moyens de détrompage configurés pour, en position d'emboîtement, coopérer avec des moyens correspondants des seconds moyens de raccordement pour autoriser l'alimentation en fluide de l'organe. Ces moyens de détrompage permettent de limiter le risque qu'une personne alimente l'organe avec un produit non adapté.

Les moyens de détrompage peuvent comprendre au moins un élément en saillie porté par le bouchon et configuré pour, en position d'emboîtement, coopérer avec un élément mobile des seconds moyens de raccordement pour provoquer un déplacement de cet élément mobile et autoriser l'alimentation en fluide de l'organe. Ainsi, dans le cas ou un récipient qui ne comprendrait pas d'élément en saillie serait raccordé à l'organe, l'alimentation de l'organe ne serait pas possible car l'élément mobile ne serait pas déplacé.

Le bouchon peut comprendre plusieurs éléments en saillie qui sont régulièrement répartis autour de l'axe longitudinal du bouchon. Ces éléments en saillie peuvent s'étendre sensiblement radialement par rapport à l'axe longitudinal du bouchon ou sont incurvés et s'étendent autour de cet axe longitudinal.

La présente invention concerne également un organe tel qu'une pompe ou un réservoir, comprenant une ouverture d'alimentation en fluide lave-glace équipée de seconds moyens de raccordement configurés pour coopérer avec les premiers moyens de raccordement du récipient tel que décrit ci-dessus.

Les seconds moyens de raccordement de l'organe peuvent comprendre une bague cylindrique montée au niveau de l'ouverture de l'organe et comportant une paroi transversale qui comprend au moins un orifice ou une fente de passage de liquide. Comme décrit dans ce qui précède, cette paroi transversale peut être configurée pour empêcher l'utilisation d'un entonnoir pour alimenter l'organe, et en particulier pour empêcher l'engagement de la partie de petite section de cet entonnoir dans l'ouverture du récipient. L'organe ne peut ainsi être alimenté en fluide que par le récipient selon l'invention.

Avantageusement, une membrane est montée mobile dans la bague entre une première position dans laquelle l'élément est en appui sur la paroi transversale pour obturer ledit au moins un orifice ou ladite au moins une fente, et une position dans laquelle la membrane est éloignée de la paroi pour autoriser le passage de fluide à travers ledit au moins un orifice ou ladite au moins une fente, des moyens de rappel étant montés dans la bague pour solliciter la membrane dans sa première position.

La bague peut comprendre au moins un orifice ou une fente configuré pour être traversé par au moins un élément en saillie de détrompage des premiers moyens de raccordement, qui est destiné à prendre appui sur la membrane en vue de son déplacement. Ledit au moins un orifice ou ladite au moins une fente destiné à être traversé par ledit au moins un élément en saillie, peut être formé dans la paroi transversale de la bague ou autour de celle-ci.

La présente invention concerne encore un dispositif d'alimentation en fluide lave-glace comprenant un récipient et un organe tels que décrit ci-dessus.

La présente invention concerne enfin un système de lavage de pare-brise de véhicule, comprenant un dispositif d'alimentation en fluide lave-glace du type précité, des moyens d'aspersion du pare-brise avec ledit fluide et des moyens d'essuyage du pare-brise.

La présente invention concerne également un récipient de fluide lave-glace, comprenant une ouverture de distribution de fluide équipée de premiers moyens de raccordement configurés pour coopérer avec des seconds moyens de raccordement d'une ouverture d'un organe tel qu'une pompe ou un réservoir pour assurer une communication fluidique entre ces ouvertures, lesdits premiers moyens de raccordement comprenant un élément mobile depuis une première position d'obturation de l'ouverture du récipient jusqu'à une deuxième position de libération de cette ouverture, ces premiers moyens étant configurés pour coopérer avec les seconds moyens pour provoquer le déplacement de l'organe mobile de la première à la deuxième position, les premiers moyens de raccordement comprennent un bouchon monté au niveau de l'ouverture du récipient et comportant au moins un orifice ou une fente de passage de liquide, le récipient est caractérisé en ce que le bouchon forme l'élément mobile et est déplaçable en rotation autour de son axe longitudinal vis-à-vis du récipient et en translation le long de cet axe longitudinal, le bouchon étant déplaçable en translation entre une première position dans laquelle le bouchon obture l'ouverture du récipient, et une deuxième position dans laquelle ledit au moins un orifice ou ladite au moins une fente du bouchon est en communication fluidique avec cette ouverture.

La présente invention concerne également un organe tel qu'une pompe ou un réservoir, comprenant une ouverture d'alimentation en fluide lave-glace équipée de seconds moyens de raccordement configurés pour coopérer avec les premiers moyens de raccordement du récipient tel que décrit ci-dessus.

La présente invention concerne également un dispositif d'alimentation en fluide lave-glace comprenant un récipient et un organe tels que décrits ci-dessus.

La présente invention concerne également un système de lavage de pare-brise de véhicule, comprenant un dispositif tel que décrit ci-dessus des moyens d'aspersion du pare-brise avec ledit fluide et des moyens d'essuyage du pare-brise.

La présente invention concerne également un récipient de fluide lave-glace, comprenant une ouverture de distribution de fluide équipée de premiers moyens de raccordement configurés pour coopérer avec des seconds moyens de raccordement d'une ouverture d'un organe tel qu'une pompe ou un réservoir pour assurer une communication fluidique entre ces ouvertures, caractérisé en ce que lesdits premiers moyens de raccordement comprennent des moyens d'anti-rotation configurés pour coopérer avec des moyens correspondants des seconds moyens pour solidariser en rotation lesdits premiers et seconds moyens.

La présente invention concerne également un récipient de fluide lave-glace, comprenant une ouverture de distribution de fluide équipée de premiers moyens de raccordement configurés pour coopérer avec des seconds moyens de raccordement d'une ouverture d'un organe tel qu'une pompe ou un réservoir pour assurer une communication fluidique entre ces ouvertures, caractérisé en ce que lesdits premiers moyens de raccordement comprennent des moyens de détrompage configurés pour coopérer avec des moyens correspondants des seconds moyens pour autoriser ladite communication fluidique.

La présente invention concerne également un récipient de fluide lave-glace, comprenant une ouverture de distribution de fluide équipée de premiers moyens de raccordement configurés pour coopérer avec des seconds moyens de raccordement d'une ouverture d'un organe tel qu'une pompe ou un réservoir pour assurer une communication fluidique entre ces ouvertures, caractérisé en ce que lesdits premiers moyens de raccordement comprennent des moyens d'anti-remplissage configurés pour empêcher un remplissage du récipient, par exemple au moyen d'un entonnoir.

La présente invention concerne également un organe tel qu'une pompe ou un réservoir, comprenant une ouverture d'alimentation en fluide lave-glace équipée de seconds moyens de raccordement configurés pour coopérer avec les premiers moyens de raccordement du récipient tel que décrit ci-dessus.

La présente invention concerne également un organe tel qu'une pompe ou un réservoir, comprenant une ouverture d'alimentation en fluide lave-glace équipée de seconds moyens de raccordement configurés pour coopérer avec des premiers moyens de raccordement d'une ouverture de distribution de fluide d'un récipient de fluide lave-glace, pour assurer une communication fluidique entre ces ouvertures, caractérisé en ce que lesdits seconds moyens de raccordement comprennent des moyens d'anti-rotation configurés pour coopérer avec des moyens correspondants des premiers moyens pour solidariser en rotation lesdits premiers et seconds moyens.

La présente invention concerne également un organe tel qu'une pompe ou un réservoir, comprenant une ouverture d'alimentation en fluide lave-glace équipée de seconds moyens de raccordement configurés pour coopérer avec des premiers moyens de raccordement d'une ouverture de distribution de fluide d'un récipient de fluide lave-glace, pour assurer une communication fluidique entre ces ouvertures, caractérisé en ce que lesdits seconds moyens de raccordement comprennent des moyens de détrompage configurés pour coopérer avec des moyens correspondants des premiers moyens pour autoriser ladite communication fluidique.

La présente invention concerne également un organe tel qu'une pompe ou un réservoir, comprenant une ouverture d'alimentation en fluide lave-glace équipée de seconds moyens de raccordement configurés pour coopérer avec des premiers moyens de raccordement d'une ouverture de distribution de fluide d'un récipient de fluide lave-glace, pour assurer une communication fluidique entre ces ouvertures, caractérisé en ce que lesdits seconds moyens de raccordement comprennent des moyens d'anti-remplissage configurés pour empêcher un remplissage de l'organe, par exemple au moyen d'un entonnoir.

L'invention propose enfin un organe tel qu'une pompe ou un réservoir, comprenant une ouverture d'alimentation en fluide lave-glace équipée de seconds moyens de raccordement configurés pour coopérer avec des premiers moyens de raccordement d'une ouverture de distribution de fluide d'un récipient de fluide lave-glace, pour assurer une communication fluidique entre ces ouvertures, caractérisé en ce que lesdits seconds moyens de raccordement comprennent un élément mobile depuis une première position d'obturation de l'ouverture du récipient jusqu'à une deuxième position de libération de cette ouverture, ces premiers moyens étant configurés pour coopérer avec les premiers moyens précités pour provoquer le déplacement de l'organe mobile de la première à la deuxième position.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en perspective d'un dispositif d'alimentation en fluide lave-glace pour un système de lavage de pare-brise de véhicule ;
- la figure 2 est une vue schématique en perspective éclatée d'un récipient et des moyens de raccordement de ce récipient à un organe selon un mode de réalisation de l'invention ;
- la figure 3 est une vue schématique en perspective de certaines pièces des moyens de raccordement de la figure 2 ;
- la figure 4 est une vue schématique en perspective et partiellement en transparence du récipient et des moyens de raccordement de la figure 2 ;
- les figures 5 et 6 sont des vues schématiques en perspective et en transparence du bouchon du récipient de la figure 2, et illustre deux positions différentes du bouchon sur le récipient ;
- les figures 7 et 8 sont des vues correspondant aux figures 3 et 4, respectivement, et représentent une variante de réalisation de l'invention ;
- les figures 9 et 10 sont des vues correspondant aux figures 2 et 4, respectivement, et représentent une autre variante de réalisation de l'invention ;
- la figure 11 est une vue schématique en perspective du récipient de la variante de réalisation des figures 9 et 10 ;
- les figures 12 et 13 sont des vues schématiques en coupe axiale du récipient et des moyens de raccordement de ce récipient à l'organe, selon la variante de réalisation des figures 9 et 10 ;
- la figure 14 est une vue schématique en coupe axiale d'un récipient et de ses moyens de raccordement, selon une autre variante de réalisation qui ne fait pas partie de l'invention ; et
- les figures 15 et 16 sont des vues schématiques en perspective du bouchon du récipient de la figure 14.

### DESCRIPTION DETAILLEE

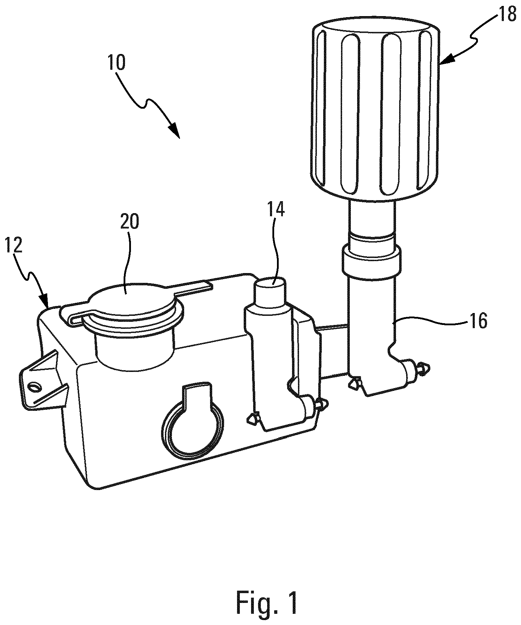

On se réfère d'abord à la figure 1 qui représente un dispositif 10 d'alimentation en fluide lave-glace pour un système de lavage de pare-brise de véhicule. Classiquement, ce système comprend, en plus du dispositif 10, des moyens d'aspersion du pare-brise avec le fluide lave-glace et des moyens d'essuyage du pare-brise.

Le dispositif 10 comprend un réservoir 12 de fluide lave-glace qui est raccordé à une première pompe 14 pour l'alimentation du système de lavage avec le fluide contenu dans ce réservoir, et qui porte une seconde pompe 16 qui est raccordée à un récipient 18 de fluide lave-glace pour l'alimentation du système avec le fluide contenu dans ce récipient 18. Les fluides du réservoir 12 et du récipient 18 peuvent être de même nature ou de nature différente. Le réservoir 12 comprend par exemple un liquide de nettoyage et le récipient 18 comprend par exemple un produit anti-moustique ou anti gel.

Le réservoir 12 comprend une ouverture de remplissage fermée par un bouchon 20 amovible. Le récipient 18 a une forme de bouteille dans l'exemple représenté et comprend une ouverture de distribution de fluide au niveau du goulot de la bouteille, qui est reliée par des moyens de raccordement selon l'invention à une entrée ou ouverture de la pompe 16.

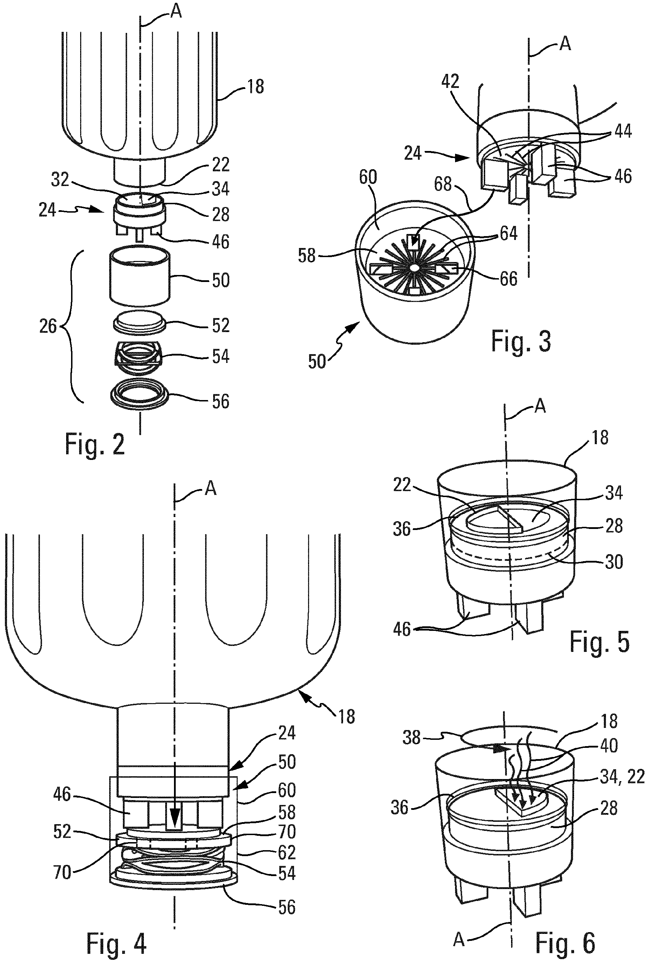

Les figures 2 à 6 représentent un premier mode de réalisation de l'invention. Le récipient 18 porte au niveau de son ouverture de distribution 22 des premiers moyens de raccordement formés par un bouchon 24, ce bouchon étant destiné à coopérer avec des seconds moyens de raccordement 26 montés sur la pompe, au niveau de son ouverture, pour autoriser la communication fluidique entre le récipient et la pompe, c'est-à-dire la distribution de fluide par le récipient et l'alimentation en fluide de la pompe.

Le bouchon 24 a une forme générale cylindrique d'axe longitudinal A. Il comprend à une extrémité un rebord cylindrique 28 d'insertion dans le goulot du récipient 18, ce rebord cylindrique comportant par exemple un bourrelet annulaire externe de matière (schématiquement représenté par des traits pointillés 30 en figure 5) engagé par encliquetage élastique dans une gorge annulaire interne de la paroi interne du goulot, pour assurer la retenue axiale (le long de l'axe A) du bouchon vis-à-vis du récipient. Le bourrelet de matière 30 est configuré pour coopérer par glissement dans la gorge afin de guider en rotation le bouchon 24 vis-à-vis du récipient 18, autour de l'axe A. Le bouchon est ainsi monté en rotation autour de l'axe A sur le récipient.

Le bouchon 24 comprend une première paroi transversale 32 au niveau du rebord cylindrique 28. Cette paroi transversale 32 comprend un orifice 34 traversant, qui est ici sensiblement en forme de demi-cercle et est situé sur une demi portion semi circulaire de la paroi 32. Le goulot du récipient comprend également une paroi transversale 36 qui comprend l'ouverture 22 précitée, qui est ici sensiblement en forme de demi-cercle et est située sur une demi portion semi circulaire de la paroi 36 (figures 5 et 6).

Comme cela est visible aux figures 5 et 6, le bouchon 24 est déplaçable en rotation (flèche 38) vis-à-vis du récipient 18 entre une position dans laquelle l'orifice 34 de la paroi 32 du bouchon n'est pas aligné avec l'ouverture 22, qui est alors obturée par la paroi 32 du bouchon, et une position dans laquelle l'orifice 34 et l'ouverture 22 sont alignés, ce qui autorise la distribution du fluide contenu dans le récipient par son ouverture 22 (flèches 40).

Le bouchon 24 comprend une deuxième paroi transversale 42 à son extrémité opposée au rebord 28. Cette paroi transversale 42 comprend une rangée annulaire de fentes radiales 44 (par rapport à l'axe A), qui sont régulièrement réparties autour de l'axe A. Ces fentes 44 sont en communication fluidique avec l'orifice 34 du bouchon.

Le bouchon 24 comprend en outre une rangée annulaire de doigts 46 longitudinaux, qui sont en saillie sur la paroi 42 et s'étendent depuis cette paroi, du côté opposé au rebord 28. Ces doigts 46 sont parallèles entre eux et à l'axe A. Ils ont chacun une forme sensiblement parallélépipédique et ont en section une forme rectangulaire. Ils sont ici au nombre de quatre et sont régulièrement répartis autour de l'axe A, au voisinage du bord périphérique externe de la paroi 42.

Dans l'exemple représenté, les moyens 26 de raccordement à l'ouverture de la pompe comprennent quatre éléments : une bague 50, une membrane 52 montée mobile dans la bague 50, un ressort 54 monté dans la bague et formant des moyens de rappel prenant appui sur la membrane, et un anneau 56 de retenue de la membrane 52 et du ressort 54 dans la bague.

La bague 50, mieux visible en figure 3, a une forme générale cylindrique et comprend une paroi transversale 58 située sensiblement au milieu de la bague et délimitant des évidements cylindriques internes de la bague, respectivement supérieur 60 et inférieur 62 (figures 3 et 4).

La paroi transversale 58 comprend une rangée annulaire de fentes radiales 64 (par rapport à l'axe longitudinal de la bague qui, en position de montage, est confondu avec l'axe A), qui sont régulièrement réparties autour de cet axe longitudinal. Ces fentes 64 sont traversantes et assurent une communication fluidique entre les évidements 60 et 62 de la bague 50.

La paroi 58 comprend en outre une rangée annulaire d'orifices 66 de passage des doigts 46 du bouchon. Ces orifices 66 ont chacun une forme sensiblement rectangulaire et ont des dimensions légèrement supérieures aux dimensions transversales des doigts 46 du bouchon. Ils sont ici au nombre de quatre et sont régulièrement répartis autour de l'axe A, au voisinage du bord périphérique externe de la paroi 58.

Le bouchon 24 est destiné à être engagé dans l'évidement supérieur 60 de la bague 50 et ses doigts 46 sont destinés à traverser les orifices 66 de la paroi 58 de la bague lors de cet engagement. Pour cela, il faut que le bouchon 24 soit préalablement aligné sur la bague et qu'il soit positionné angulairement autour de l'axe A, de sorte que ses doigts 46 soient alignés avec les orifices 66 (flèche 68).

La membrane 52 est sensiblement circulaire et est montée dans l'évidement inférieur 62 de la bague 50, et intercalée entre la paroi 58 de la bague et le ressort 54. La membrane 52 est mobile en translation le long de l'axe A dans cet évidement 62, entre une première position dans laquelle elle est en appui axial sur la paroi 58 et obture les fentes 64 de cette paroi, pour empêcher l'alimentation en fluide de la pompe, et une deuxième position dans laquelle elle est à distance axiale de la paroi 58 et laisse libre les fentes 64. Le déplacement de la membrane 52 de la première à la deuxième position est provoqué par appui axial des doigts 46 sur la face supérieure de la membrane, lorsque ces doigts traversent les orifices 66 de la paroi 58 de la bague, comme cela est représenté en figure 4.

La membrane 52 comprend à sa périphérie externe des encoches axiales 70 schématiquement représentées par des traits pointillés en figure 4. Ces encoches 70 sont situées en regard d'une partie périphérique de la paroi 58 de la bague qui n'est pas fendue, c'est-à-dire qui n'est pas traversée par les fentes 64 précitées. Ainsi, lorsque la membrane 52 est dans sa première position, elle obture complètement les fentes 64 et le fluide ne peut pas passer à travers celles-ci. Lorsque la membrane 52 est dans sa deuxième position, les encoches 70 définissent avec la surface cylindrique interne de la bague 50 des espaces de passage du fluide qui vient de traverser les fentes 64 de la paroi 58.

L'anneau 56 est fixé à l'extrémité inférieure de la bague 50 et maintient le ressort 54 en appui sur la membrane 52. En position de montage et, lorsque la membrane 52 est dans la première position précitée, le ressort 54 est légèrement précontraint entre la membrane et l'anneau 56, la force exercée par le ressort sur la membrane étant suffisante pour assurer une étanchéité entre la paroi 58 et la membrane 52.

Le récipient 18 peut être raccordé à la pompe de la façon suivante : le bouchon 24 est préalablement monté sur le goulot du récipient qui contient le fluide lave-glace. Avant une première utilisation, la paroi transversale 58 du bouchon peut être revêtue d'un opercule garantissant que le récipient n'a jamais été utilisé, et qui doit être retiré avant de raccorder le récipient à la pompe. Les moyens de raccordement 26 sont également préalablement montés par des moyens appropriés dans ou sur l'ouverture de la pompe. Le récipient 18 est disposé au dessus des moyens de raccordement 26 et aligné sur ceux-ci, comme représenté en figure 2, les doigts 46 du bouchon 24 étant alignés axialement sur les orifices 66 de la bague 50 des moyens de raccordement 26. Le récipient est ensuite déplacé par translation le long de l'axe A vers la bague 50, jusqu'à ce que le bouchon s'engage dans l'évidement supérieur 60 de la bague et que ses doigts 46 traversent les orifices 66 de la paroi 58 de la bague. Lors de la traversée de ces orifices 66, les doigts 46 prennent appui sur la membrane 52 et la déplace en translation le long de l'axe A pour l'éloigner de la paroi 58. L'ouverture de la pompe est alors en communication fluidique avec l'évidement supérieur 60 de la bague, par l'intermédiaire des encoches 70 de la membrane et des fentes 64 de la paroi 58 de la bague. Cela ne suffit toutefois pas à assurer la communication fluidique entre la pompe et le récipient 18 car l'ouverture de ce dernier est encore obturée par le bouchon 24. Le récipient 18 doit être déplacé en rotation autour de l'axe A vis-à-vis du bouchon 24 et des moyens de raccordement 26. Les doigts 46 du bouchon coopèrent avec la bague 50 pour former des moyens d'anti-rotation rendant le bouchon solidaire en rotation de la bague, dès lors que ces doigts sont engagés dans les orifices 66 de la paroi 58 de la bague. Le récipient 18 est ainsi tourné jusqu'à ce que l'orifice 34 du bouchon soit en communication fluidique avec l'ouverture 22 du récipient, ce qui représente dans l'exemple représenté un déplacement du bouchon sensiblement d'un demi tour autour de l'axe A (figures 5 et 6). La communication fluidique entre les ouvertures du récipient et de la pompe est alors établie.

Dans le mode de réalisation décrit dans ce qui précède, les doigts 46 du bouchon 24 forment notamment, avec des moyens complémentaires des moyens de raccordement 26, des moyens d'anti-rotation et des moyens de détrompage empêchant l'alimentation de la pompe dans le cas où un bouchon ne comportant pas de tels doigts serait utilisé.

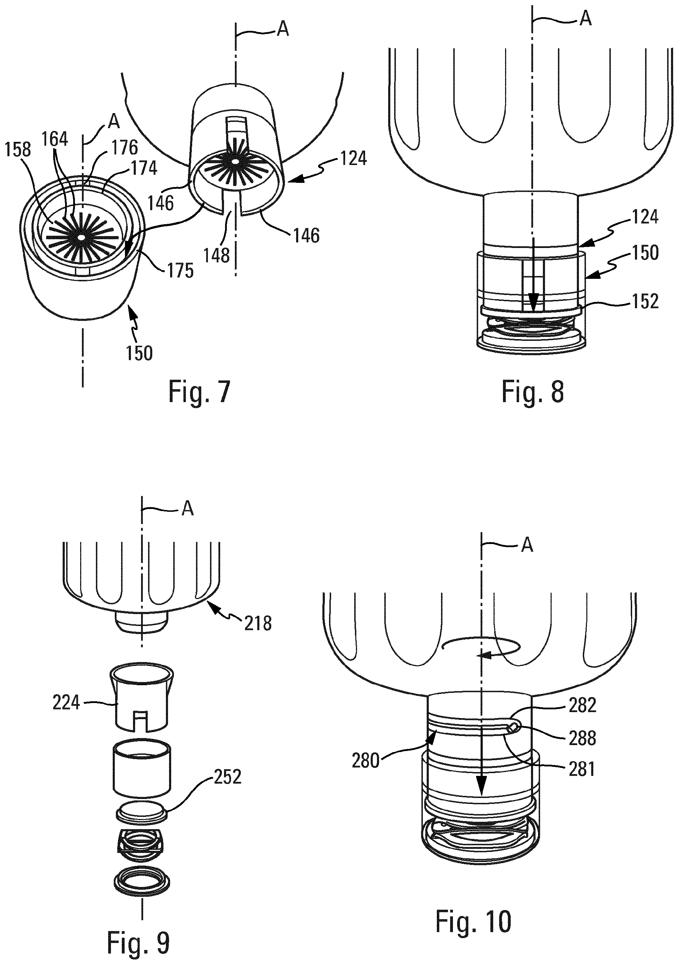

La variante de réalisation des figures 7 et 8 diffère du mode de réalisation décrit précédemment notamment en ce que les moyens d'anti-rotation et de détrompage du bouchon 124 sont formés par des doigts de formes différentes ou plutôt des parois 146 incurvées dont le rayon de courbure est centré sur l'axe A. Ces parois 146 sont ici au nombre de deux. Elles s'étendent le long de l'axe A du côté opposé au rebord 28 précité, et ont un diamètre externe sensiblement égal au diamètre externe du bouchon. Elles s'étendent donc le long de l'axe A dans le prolongement du bouchon. Elles sont séparées l'une de l'autre par des espaces circonférentiels 148.

La bague 150 diffère de celle 50 du précédent mode de réalisation notamment par le forme et la position des orifices de passage des moyens d'anti-rotation (parois 146), dont les extrémités libres sont destinées à prendre appui sur la membrane 152 montée dans la bague en vue de son déplacement.

La paroi transversale 158 de la bague 150, qui comporte les fentes radiales 164, est reliée à sa périphérie externe à une jupe cylindrique 174 qui définit intérieurement l'évidement cylindrique supérieur de la bague, dans lequel est destiné à être engagé le bouchon 124. Cette jupe 174 est coaxiale à la paroi cylindrique 175 de la bague et s'étend à l'intérieur et à distance de celle-ci. Elle est reliée à la paroi 175 de la bague par deux voiles 176 longitudinaux diamétralement opposés. La paroi 175 et la jupe 174 de la bague définissent entre elles deux espaces circonférentiels qui sont séparés l'un de l'autre par les voiles 176 et dans lesquels sont destinées à être engagées les parois 146 du bouchon. Lorsque les parois 146 du bouchon sont engagées dans ces espaces, leurs extrémités circonférentielles peuvent venir en butée sur les voiles, de façon à former des moyens d'anti-rotation du bouchon vis-à-vis de la bague.

Le fonctionnement de cette variante peut être similaire à celui du mode de réalisation décrit dans ce qui précède.

La variante de réalisation des figures 9 à 13 diffère de la précédente variante notamment par le montage du bouchon 224 sur le goulot du récipient 218.

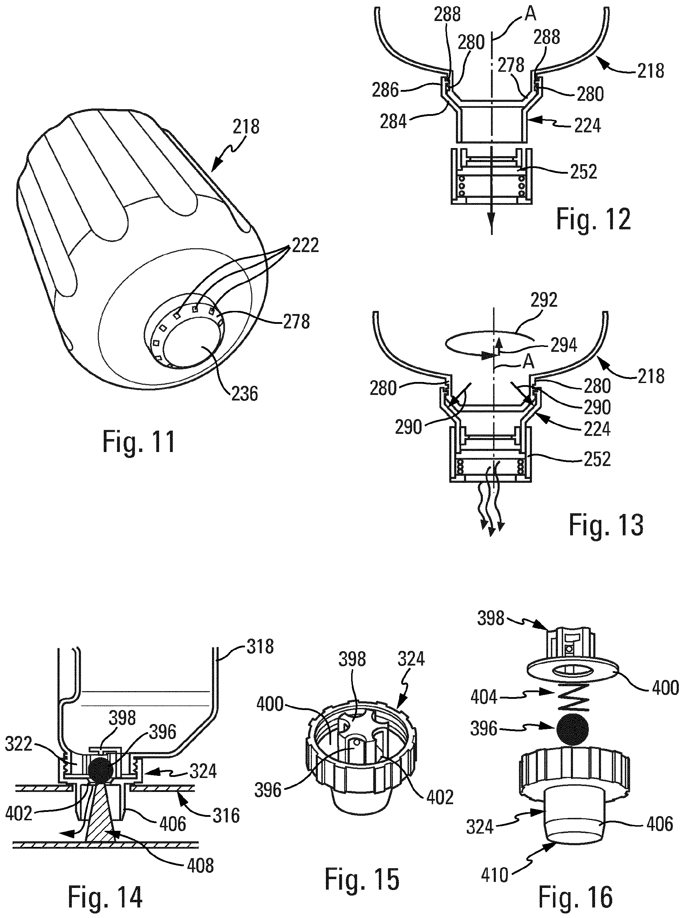

Le goulot du récipient 218 comprend une paroi cylindrique dont l'extrémité libre est reliée à l'extrémité de plus grand diamètre d'une paroi tronconique 278 dont l'extrémité de plus petit diamètre est reliée à une paroi transversale 236 pleine (figure 11). La paroi tronconique 278 comprend une rangée annulaire de trous traversants qui forment l'ouverture 222 de distribution du récipient.

La paroi cylindrique du goulot du récipient comprend sur sa surface externe deux gorges 280 en U diamétralement opposées dont une seule est visible en figure 10. Chaque gorge 280 comprend deux parties circonférentielles, respectivement inférieure 281 et supérieure 282, qui s'étendent autour de l'axe A. Ces parties 281, 282 sont sensiblement identiques et s'étendent sur une même plage angulaire autour de l'axe A. Elles sont disposées l'une au dessus de l'autre et une des extrémités circonférentielles d'une partie est reliée à l'extrémité circonférentielle adjacente de l'autre partie (figure 10).

Le bouchon 224 diffère de celui 124 de la précédente variante notamment par le fait que son extrémité située du côté du récipient comprend une paroi tronconique 284 dont l'extrémité de plus grand diamètre est reliée à un rebord cylindrique 286 de montage sur le goulot du récipient (figures 12 et 13). En position de montage et de fermeture de l'ouverture 222 du récipient (figure 12), le rebord 286 entoure la paroi cylindrique du goulot et la paroi tronconique 284 entoure la paroi tronconique 278 du goulot.

Le rebord cylindrique 286 du bouchon 224 comprend deux ergots 288 diamétralement opposés, qui sont en saillie sur la surface interne du bouchon et qui sont chacun engagé à coulissement dans une des gorges 280 du goulot (figure 10). Chaque ergot 288 est déplaçable dans la gorge correspondante, par exemple depuis la partie 282 de cette gorge jusqu'à sa partie 281. Ce déplacement est provoqué par une rotation du récipient 218 vis-à-vis du bouchon 224, autour de l'axe A, et une translation du récipient le long de l'axe A par rapport au bouchon. Dans le cas où les ergots 288 sont situés aux extrémités libres des parties supérieures 282 des gorges, une rotation du récipient vis-à-vis du bouchon est nécessaire pour déplacer les ergots 288 jusqu'aux extrémités opposées des parties 282. Une translation du récipient par rapport au bouchon, du côté opposé à la pompe, permet de déplacer les ergots de la partie 282 à la partie 281 de chaque gorge 280. Une autre rotation du récipient vis-à-vis du bouchon, dans le sens contraire à celui précédemment effectué, permet de déplacer les ergots 288 jusqu'aux extrémités libres des parties 281 des gorges.

Le bouchon 224 est conçu pour que, lorsque les ergots sont dans les parties inférieures 281 des gorges 280, les parois tronconiques 278 et 284 du goulot et du bouchon soient en appui l'une sur l'autre et les trous 222 de la paroi 278 soient ainsi obturés par la paroi 284 (figure 12), et que, lorsque les ergots sont dans les parties supérieures 282 des gorges, les parois 278 et 284 soient à distance l'une de l'autre et le fluide contenu dans le récipient 218 puisse être distribué via les trous 222 (figure 13 - flèches 290).

Le bouchon 224 et le goulot du récipient sont ainsi reliés entre eux par une liaison du type à baïonnette. En variante, cette liaison, qui permet une rotation et une translation du bouchon sur le goulot, pourrait être du type à filetage, le bouchon comportant une filetage vissé dans une filetage de forme complémentaire du goulot.

Comme expliqué dans ce qui précède, le simple emboîtement du bouchon 224 dans les moyens de raccordement de la pompe, qui permet de déplacer la membrane 252 de sa première à sa seconde position, ne permet pas d'assurer à lui seul la communication fluidique entre les ouvertures du récipient et de la pompe. Avant le raccordement du récipient à la pompe, le bouchon est dans la position représentée en figure 12 dans laquelle les trous 222 du récipient sont obturés. Après emboîtement du bouchon dans les moyens de raccordement de la pompe, le récipient est tourné autour de l'axe A pour amener les ergots 288 des extrémités libres des parties 282 des gorges 280 à leurs extrémités opposées (flèches 292). Le récipient est ensuite déplacé par translation du côté opposé à la pompe pour que les ergots passent dans les parties 281 inférieures des gorges (flèche 294). La communication fluidique entre les ouvertures du récipient et de la pompe est alors établie. Il est possible de maintenir le récipient dans cette position d'ouverture en tournant le récipient par rapport au bouchon de sorte que les ergots 288 se déplacent jusqu'aux extrémités libres des parties 280 des gorges.

On se réfère désormais aux figures 14 à 16 qui représentent une autre variante de réalisation qui ne fait pas partie de l'invention, dans laquelle le bouchon 324 comprend une bille 396 qui est montée prisonnière dans une cage 398 fixée au bouchon.

Le bouchon 324 est ici vissé sur le goulot du récipient 318 et peut être fixé à demeure sur ce goulot. Le bouchon comprend une paroi transversale 400 comportant un orifice central 402, cet orifice central ayant un diamètre inférieur à celui de la bille et étant conformé pour former un siège à cette bille 396. La bille 396 est déplaçable à l'intérieur de sa cage 398 entre une position dans laquelle elle prend appui sur le siège et obture l'orifice 402, et une position dans laquelle elle est à distance du siège et laisse ainsi libre l'orifice 402, qui communique alors avec l'ouverture 322 du récipient. Des moyens de rappel tels qu'un ressort 404 sont montés dans la cage 398 et sollicitent la bille 396 dans la position d'obturation de l'orifice 402.

Le bouchon 324 comprend en outre un rebord cylindrique 406 d'emboîtement dans l'ouverture d'un réservoir 316. Comme cela est schématiquement représenté en figure 14, ce réservoir 316 porte un doigt 408 qui est destiné à prendre appui sur la bille 396 et à la déplacer lors de cet emboîtement. En position d'emboîtement, le doigt 408 est engagé dans le rebord 406 et son extrémité libre prend appui sur la bille 396 et l'éloigne de son siège. Le fluide contenu dans le récipient 318 peut alors passer à travers l'orifice 402 du bouchon jusque dans le réservoir 316.

Dans cette variante, un seul déplacement en translation du récipient vis-à-vis du réservoir, jusqu'à l'emboîtement du bouchon dans l'ouverture du réservoir, suffit à établir une communication fluidique entre le récipient et le réservoir.

L'extrémité libre du rebord cylindrique 406 du bouchon peut être revêtue d'un opercule 410 du type précité, destiné à être déchiré par le doigt 408 lors du montage du récipient.

## Revendications

1. Récipient (18) de fluide lave-glace, comprenant une ouverture (22) de distribution de fluide équipée de premiers moyens de raccordement (24) configurés pour coopérer avec des seconds moyens de raccordement (26) d'une ouverture d'un organe tel qu'une pompe (16) ou un réservoir pour assurer une communication fluidique entre ces ouvertures, lesdits premiers moyens de raccordement comprenant un élément mobile (24) depuis une première position d'obturation de l'ouverture du récipient jusqu'à une deuxième position de libération de cette ouverture, ces premiers moyens étant configurés pour coopérer avec les seconds moyens pour provoquer le déplacement de l'organe mobile de la première à la deuxième position, les premiers moyens de raccordement comprennent un bouchon (24) monté au niveau de l'ouverture (22) du récipient (18) et comportant au moins un orifice ou une fente (44) de passage de liquide, le récipient (18) est **caractérisé en ce que** le bouchon (24) forme l'élément mobile et est déplaçable en rotation autour de son axe longitudinal (A) vis-à-vis du récipient (18), entre une première position dans laquelle le bouchon obture l'ouverture (22) du récipient, et une deuxième position dans laquelle ledit au moins un orifice ou ladite au moins une fente (44) du bouchon est en communication fluidique avec cette ouverture.

2. Récipient (18) selon la revendication 1, **caractérisé en ce que** le bouchon (24) comprend une paroi transversale (42) dans laquelle est formé ledit au moins un orifice ou ladite au moins une fente (44).

3. Récipient selon la revendication 1 ou 2, **caractérisé en ce que** le bouchon (24) est configuré pour être au moins en partie emboîté dans les seconds moyens de raccordement (26) et comprend des moyens de détrompage (46) configurés pour, en position d'emboîtement, coopérer avec des moyens (66) correspondants des seconds moyens de raccordement (26) pour autoriser l'alimentation en fluide de l'organe.

4. Récipient (18) selon la revendication 3, **caractérisé en ce que** les moyens de détrompage comprennent au moins un élément en saillie (46) porté par le bouchon (24) et configuré pour, en position d'emboîtement, coopérer avec un élément mobile (52) des seconds moyens de raccordement (26) pour provoquer un déplacement de cet élément mobile et autoriser l'alimentation en fluide de l'organe.

5. Récipient (18) selon la revendication 4, **caractérisé en ce que** le bouchon (24) comprend plusieurs éléments en saillie (46) qui sont régulièrement répartis autour de l'axe longitudinal (A) du bouchon.

6. Récipient (18) selon la revendication 5, **caractérisé en ce que** les éléments en saillie (46) s'étendent sensiblement radialement par rapport à l'axe longitudinal (A) du bouchon (24) ou sont incurvés et s'étendent autour de cet axe longitudinal.

7. Organe tel qu'une pompe (16) ou un réservoir, comprenant une ouverture d'alimentation en fluide lave-glace équipée de seconds moyens de raccordement (26) configurés pour coopérer avec les premiers moyens de raccordement du récipient (18) selon l'une des revendications précédentes.

8. Organe selon la revendication précédente, en dépendance de l'une des revendications 1 à 6, **caractérisé en ce que** lesdits seconds moyens de raccordement (26) comprennent une bague cylindrique (50) montée au niveau de l'ouverture de l'organe et comportant une paroi transversale (58) qui comprend au moins un orifice ou une fente (64) de passage de liquide.

9. Organe selon la revendication précédente, **caractérisé en ce qu'**une membrane (52) est montée mobile dans la bague (50) entre une première position dans laquelle la membrane est en appui sur la paroi transversale (58) pour obturer ledit au moins un orifice ou ladite au moins une fente (64), et une position dans laquelle la membrane est éloignée de la paroi pour autoriser le passage de fluide à travers ledit au moins un orifice ou ladite au moins une fente, des moyens de rappel (54) étant montés dans la bague pour solliciter la membrane dans sa première position.

10. Organe selon la revendication précédente, **caractérisé en ce que** la bague (50) comprend au moins un orifice (66) ou une fente configuré pour être traversé par au moins un élément en saillie (46) de détrompage des premiers moyens de raccordement, qui est destiné à prendre appui sur la membrane (52) en vue de son déplacement.

11. Organe selon la revendication précédente, **caractérisé en ce que** ledit au moins un orifice (66) ou ladite au moins une fente destiné à être traversé par ledit au moins un élément en saillie (46), est formé dans la paroi transversale (58) de la bague ou autour de celle-ci.

12. Dispositif (10) d'alimentation en fluide lave-glace comprenant un récipient selon l'une des revendications 1 à 6 et un organe selon l'une des revendications 7 à 11.

13. Système de lavage de pare-brise de véhicule, comprenant un dispositif selon la revendication 12, des moyens d'aspersion du pare-brise avec ledit fluide et des moyens d'essuyage du pare-brise.

14. Récipient (18) de fluide lave-glace, comprenant une ouverture (222) de distribution de fluide équipée de premiers moyens de raccordement (224) configurés pour coopérer avec des seconds moyens de raccordement (26) d'une ouverture d'un organe tel qu'une pompe (16) ou un réservoir pour assurer une communication fluidique entre ces ouvertures, lesdits premiers moyens de raccordement comprenant un élément mobile (224) depuis une première position d'obturation de l'ouverture du récipient jusqu'à une deuxième position de libération de cette ouverture, ces premiers moyens étant configurés pour coopérer avec les seconds moyens pour provoquer le déplacement de l'organe mobile de la première à la deuxième position, les premiers moyens de raccordement comprennent un bouchon (224) monté au niveau de l'ouverture (222) du récipient (18) et comportant au moins un orifice ou une fente (44) de passage de liquide, le récipient (18) est **caractérisé en ce que** le bouchon (224) forme l'élément mobile et est déplaçable en rotation autour de son axe longitudinal (A) vis-à-vis du récipient (18) et en translation le long de cet axe longitudinal, le bouchon étant déplaçable en translation entre une première position dans laquelle le bouchon obture l'ouverture (222) du récipient, et une deuxième position dans laquelle ledit au moins un orifice ou ladite au moins une fente du bouchon est en communication fluidique avec cette ouverture.

15. Organe tel qu'une pompe (16) ou un réservoir, comprenant une ouverture d'alimentation en fluide lave-glace équipée de seconds moyens de raccordement (26) configurés pour coopérer avec les premiers moyens de raccordement du récipient (18) selon la revendication précédente.

16. Dispositif (10) d'alimentation en fluide lave-glace comprenant un récipient selon la revendication 14 et un organe selon la revendication 15.

17. Système de lavage de pare-brise de véhicule, comprenant un dispositif selon la revendication 16, des moyens d'aspersion du pare-brise avec ledit fluide et des moyens d'essuyage du pare-brise.

## Patentansprüche

1. Behälter (18) für Scheibenwaschfluid, umfassend eine Öffnung (22) zur Ausgabe von Fluid, die mit ersten Anschlussmitteln (24) ausgestattet ist, die dazu ausgebildet sind, mit zweiten Anschlussmitteln (26) einer Öffnung einer Einrichtung, wie beispielsweise einer Pumpe (16) oder eines Tanks zusammenzuwirken, um eine Fluidverbindung zwischen diesen Öffnungen sicherzustellen, die ersten Anschlussmittel umfassend ein Element (24), das aus einer ersten Verschlussposition der Öffnung des Behälters bis zu einer zweiten Freigabeposition dieser Öffnung bewegbar ist, wobei diese ersten Mittel dazu ausgebildet sind, mit den zweiten Mitteln zusammenzuwirken, um die Bewegung der bewegbaren Einrichtung aus der ersten bis zur zweiten Position herbeizuführen, die ersten Anschlussmittel umfassen einen Stopfen (24), der an der Öffnung (22) des Behälters (18) angebracht ist und mindestens eine Flüssigkeitsdurchtrittsöffnung oder -spalte (44) aufweist, der Behälter (18) ist **dadurch gekennzeichnet, dass** der Stopfen (24) das bewegbare Element bildet und durch Drehen um seine Längsachse (A) bezogen auf den Behälter (18) zwischen einer ersten Position, in welcher der Stopfen die Öffnung (22) des Behälters verschließt, und einer zweiten Position, in welcher die mindestens eine Öffnung oder mindestens eine Spalte (44) des Stopfens mit dieser Öffnung in Fluidverbindung steht, bewegbar ist.

2. Behälter (18) nach Anspruch 1, **dadurch gekennzeichnet, dass** der Stopfen (24) eine Querwand (42) umfasst, in welcher die mindestens eine Öffnung oder die mindestens eine Spalte (44) ausgebildet ist.

3. Behälter nach Anspruch 1 oder 2, **dadurch gekennzeichnet, dass** der Stopfen (24) dazu ausgebildet ist, zumindest teilweise in die zweiten Anschlussmittel (26) eingefügt zu sein und Unverwechselbarkeitsmittel (46) umfasst, die dazu ausgebildet sind, in der Einfügeposition mit entsprechenden Mitteln (66) der zweiten Anschlussmittel (26) zusammenzuwirken, um die Versorgung der Einrichtung mit Fluid zu gestatten.

4. Behälter (18) nach Anspruch 3, **dadurch gekennzeichnet, dass** die Unverwechselbarkeitsmittel mindestens ein hervorstehendes Element (46) umfassen, das von dem Stopfen (24) getragen wird und dazu ausgebildet ist, in der Einfügeposition mit einem bewegbaren Element (52) der zweiten Anschlussmittel (26) zusammenzuwirken, um eine Bewegung dieses bewegbaren Elements herbeizuführen und die Versorgung der Einrichtung mit Fluid zu gestatten.

5. Behälter (18) nach Anspruch 4, **dadurch gekennzeichnet, dass** der Stopfen (24) mehrere hervorstehende Elemente (46) umfasst, die regelmäßig um die Längsachse (A) des Stopfens verteilt sind.

6. Behälter (18) nach Anspruch 5, **dadurch gekennzeichnet, dass** sich die hervorstehenden Elemente (46) im Wesentlichen radial bezogen auf die Längsachse (A) des Stopfens (24) erstrecken oder gekrümmt sind und sich um diese Längsachse erstrecken.

7. Einrichtung wie beispielsweise eine Pumpe (16) oder ein Tank, umfassend eine Öffnung zur Versorgung mit Scheibenwaschfluid, die mit zweiten Anschlussmitteln (26) ausgestattet ist, die dazu ausgebildet sind, mit den ersten Anschlussmitteln des Behälters (18) nach einem der vorhergehenden Ansprüche zusammenzuwirken.

8. Einrichtung nach dem vorhergehenden Anspruch, in Abhängigkeit von einem der Ansprüche 1 bis 6, **dadurch gekennzeichnet, dass** die zweiten Anschlussmittel (26) einen zylinderförmigen Ring (50) umfassen, der an der Öffnung der Einrichtung angebracht ist und eine Querwand (58) aufweist, die mindestens eine Flüssigkeitsdurchtrittsöffnung oder -spalte (64) aufweist.

9. Einrichtung nach dem vorhergehenden Anspruch, **dadurch gekennzeichnet, dass** eine Membran (52) in dem Ring (50) zwischen einer ersten Position, in welcher die Membran an der Querwand (58) anliegt, um die mindestens eine Öffnung oder die mindestens eine Spalte (64) zu verschließen, und einer Position, in welcher die Membran von der Wand entfernt ist, um den Durchtritt von Fluid durch die mindestens eine Öffnung oder die mindestens eine Spalte zu gestatten, bewegbar gelagert ist, wobei Rückholmittel (54) in dem Ring angebracht sind, um die Membran in ihre erste Position vorzuspannen.

10. Einrichtung nach dem vorhergehenden Anspruch, **dadurch gekennzeichnet, dass** der Ring (50) mindestens eine Öffnung (66) oder Spalte umfasst, die dazu ausgebildet ist, von dem mindestens einen hervorstehenden Unverwechselbarkeitselement (46) der ersten Anschlussmittel durchquert zu werden, das dazu bestimmt ist, an der Membran (52) mit dem Ziel ihrer Bewegung anzuliegen.

11. Einrichtung nach dem vorhergehenden Anspruch, **dadurch gekennzeichnet, dass** die mindestens eine Öffnung (66) oder die mindestens eine Spalte, die dazu bestimmt ist, von dem mindestens einen hervorstehenden Element (46) durchquert zu werden, in der Querwand (58) des Rings oder um diesen herum ausgebildet ist.

12. Vorrichtung (10) zur Versorgung mit Scheibenwaschfluid, umfassend einen Behälter nach einem der Ansprüche 1 bis 6 und eine Einrichtung nach einem der Ansprüche 7 bis 11.

13. Fahrzeugwindschutzscheiben-Waschsystem, umfassend eine Vorrichtung nach Anspruch 12, Mittel zur Besprengung der Windschutzscheibe mit dem Fluid und Mittel zum Wischen der Windschutzscheibe.

14. Behälter (18) für Scheibenwaschfluid, umfassend eine Öffnung (222) zur Ausgabe von Fluid, die mit ersten Anschlussmitteln (224) ausgestattet ist, die dazu ausgebildet sind, mit zweiten Anschlussmitteln (26) einer Öffnung einer Einrichtung, wie beispielsweise einer Pumpe (16) oder eines Tanks zusammenzuwirken, um eine Fluidverbindung zwischen diesen Öffnungen sicherzustellen, die ersten Anschlussmittel umfassend ein Element (224), das aus einer ersten Verschlussposition der Öffnung des Behälters bis zu einer zweiten Freigabeposition dieser Öffnung bewegbar ist, wobei diese ersten Mittel dazu ausgebildet sind, mit den zweiten Mitteln zusammenzuwirken, um die Bewegung der bewegbaren Einrichtung aus der ersten bis zur zweiten Position herbeizuführen, die ersten Anschlussmittel umfassen einen Stopfen (224), der an der Öffnung (222) des Behälters (18) angebracht ist und mindestens eine Flüssigkeitsdurchtrittsöffnung oder -spalte (44) aufweist, der Behälter (18) ist **dadurch gekennzeichnet, dass** der Stopfen (224) das bewegbare Element bildet und durch Drehen um seine Längsachse (A) bezogen auf den Behälter (18) bewegbar ist und translatorisch entlang dieser Längsachse bewegbar ist, wobei der Stopfen translatorisch zwischen einer ersten Position, in welcher der Stopfen die Öffnung (222) des Behälters verschließt, und einer zweiten Position, in welcher die mindestens eine Öffnung oder mindestens eine Spalte des Stopfens mit dieser Öffnung in Fluidverbindung steht, bewegbar ist.

15. Einrichtung wie beispielsweise eine Pumpe (16) oder ein Tank, umfassend eine Öffnung zur Versorgung mit Scheibenwaschfluid, die mit zweiten Anschlussmitteln (26) ausgestattet ist, die dazu ausgebildet sind, mit den ersten Anschlussmitteln des Behälters (18) nach dem vorhergehenden Anspruch zusammenzuwirken.

16. Vorrichtung (10) zur Versorgung mit Scheibenwaschfluid, umfassend einen Behälter nach Anspruch 14 und eine Einrichtung nach Anspruch 15.

17. Fahrzeugwindschutzscheiben-Waschsystem, umfassend eine Vorrichtung nach Anspruch 16, Mittel zur Besprengung der Windschutzscheibe mit dem Fluid und Mittel zum Wischen der Windschutzscheibe.

## Claims

1. A wiper fluid container (18), comprising a fluid dispensing opening (22) equipped with first connecting means (24) configured to cooperate with second connecting means (26) of an opening of a member such as a pump (16) or a reservoir in order to ensure fluid communication between those openings, said first connecting means comprising an element (24) that can move from a first position closing off the opening of the container to a second position of freeing that opening, these first means being configured to cooperate with the second means in order to cause the movement of the movable member from the first to the second position, the first connecting means comprise a bung (24) mounted at the opening (22) of the container (18) and including at least one hole or one slit (44) for the passage of liquid, the container (18) is **characterized in that** the bung (24) forms the movable element and can be moved in rotation about its longitudinal axis (A) relative to the container (18), between a first position in which the bung closes off the opening (22) of the container and a second position in which said at least one hole or said at least one slit (44) of the bung is in fluid communication with that opening.

2. The container (18) as claimed in claim 1, **characterized in that** the bung (24) comprises a transverse wall (42) in which said at least one hole or said at least one slit (44) is formed.

3. The container as claimed in one of claims 1 or 2, **characterized in that** the bung (24) is configured to be at least partly embedded in the second connecting means (26) and comprises locating means (46) configured in order, in the embedded position, to cooperate with the corresponding means (66) of the second connecting means (26) to allow the member to be supplied with fluid.

4. The container (18) as claimed in claim 3, **characterized in that** the locating means comprise at least one projecting element (46) carried by the bung (24) and configured in order, in the embedded position, to cooperate with a movable element (52) of the second connecting means (26) in order to cause movement of that movable element and to allow the member to be supplied with fluid.

5. The container (18) as claimed in claim 4, **characterized in that** the bung (24) comprises a plurality of projecting elements (46) that are evenly distributed about the longitudinal axis (A) of the bung.

6. The container (18) as claimed in claim 5, **characterized in that** the projecting elements (46) extend substantially radially relative to the longitudinal axis (A) of the bung (24) or are curved and extend about that longitudinal axis.

7. A member, such as a pump (16) or a reservoir, comprising a wiper fluid supply opening equipped with second connecting means (26) configured to cooperate with the first connecting means of the container (18) as claimed in one of the preceding claims.

8. The member as claimed in the preceding claim, dependent on one of claims 1 to 6, **characterized in that** said second connecting means (26) comprise a cylindrical ring (50) mounted at the opening of the member and including a transverse wall (58) that comprises at least one hole or one slit (64) for the passage of liquid.

9. The member as claimed in the preceding claim, **characterized in that** a membrane (52) is movably mounted in the ring (50) between a first position in which the membrane bears on the transverse wall (58) in order to close off said at least one hole or said at least one slit (64) and a position in which the membrane is separate from the wall to allow the passage of fluid through said at least one hole or said at least one slit, return means (54) being mounted in the ring to urge the membrane into its first position.

10. The member as claimed in the preceding claim, **characterized in that** the ring (50) comprises at least one hole (66) or one slit configured in order to be traversed by at least one locating projecting element (46) of the first connecting means, which is designed to bear against the membrane (52) with a view to the movement thereof.

11. The member as claimed in the preceding claim, **characterized in that** said at least one hole (66) or said at least one slit designed to be traversed by said at least one projecting element (46) is formed in the transverse wall (58) of the ring or around same.

12. A wiper fluid supply device (10) comprising a container as claimed in one of claims 1 to 6 and a member as claimed in one of claims 7 to 11.

13. A vehicle windshield washing system comprising a device as claimed in claim 12, means for spraying the windshield with said fluid, and means for wiping the windshield.

14. A container (18), comprising a fluid dispensing opening (222) equipped with first connecting means (224) configured to cooperate with second connecting means (26) of an opening of a member such as a pump (16) or a reservoir in order to ensure fluid communication between those openings, said first connecting means comprising an element (224) that can move from a first position closing off the opening of the container to a second position of freeing that opening, these first means being configured to cooperate with the second means in order to cause the movement of the movable member from the first to the second position, the first connecting means comprise a bung (224) mounted at the opening (222) of the container (18) and including at least one hole or one slit (44) for the passage of liquid, the container (18) is **characterized in that** the bung (224) forms the movable element and can be moved in rotation about its longitudinal axis (A) relative to the container (18), and in translation along that longitudinal axis, the bung being movable in translation between a first position in which the bung closes off the opening (222) of the container and a second position in which said at least one hole or said at least one slit (44) of the bung is in fluid communication with that opening.

15. A member, such as a pump (16) or a reservoir, comprising a wiper fluid supply opening equipped with second connecting means (26) configured to cooperate with the first connecting means of the container (18) as claimed in the preceding claim.

16. A wiper fluid supply device (10) comprising a container as claimed in claim 14 and a member as claimed in claim 15.

17. A vehicle windshield washing system comprising a device as claimed in claim 16, means for spraying the windshield with said fluid, and means for wiping the windshield.
